# EUROPEAN PATENT SPECIFICATION

(11) **EP 0 951 651 B1**
(45) Date of publication and mention of the grant of the patent: **08.06.2005**
(21) Application number: 98939019.0
(22) Date of filing: 13.08.1998
(51) Int. Cl.: G01S 17/00

(54) **A SENSOR APPARATUS, AS WELL AS A METHOD OF DETERMINING THE POSITION OF AN OBJECT, IN PARTICULAR A TEAT OF AN ANIMAL TO BE MILKED**
SENSORVORRICHTUNG UND VERFAHREN ZUM ERMITTELN DER LAGE EINES OBJEKTS, INSBESONDERE EINER ZITZE EINES ZU MELKENDEN TIERES
APPAREIL DE DETECTION ET PROCEDE DE DETERMINATION DE LA POSITION D'UN OBJET, NOTAMMENT LA MAMELLE D'UN ANIMAL A TRAIRE

(30) Priority: 20.08.1997 NL 1006804
(43) Date of publication of application: 27.10.1999
(60) Divisional application: 05075286.4
(73) Proprietor: MAASLAND N.V., 3147 PA Maassluis (NL)
(72) Inventor: FRANSEN, René, NL-3135 ZD Vlaardingen (NL); VAN DER LELY, Alexander, NL-3065 NA Rotterdam (NL)
(74) Representative: Corten, Maurice Jean F.M.
(86) International application number: PCT/NL1998/000460
(87) International publication number: WO 1999/009430

(56) References cited:
- EP-A- 0 360 354
- EP-A- 0 619 502
- DE-A- 2 208 559
- GB-A- 2 176 668
- US-A- 3 515 486

## Description

The invention relates to a sensor apparatus for determining the position of an object present in a space, in particular a teat of an animal to be milked, according to the preamble of claim 1.

Such a sensor apparatus is known from EP-A2-0619502. It is an object of the present invention to provide an alternative sensor apparatus.

In addition the invention aims at a sensor apparatus having compact dimensions; a great scanning angle of preferably at least approximately 100°, more preferably of approximately 120° to 140°; scanning while using a minimum of moving parts; reliability in operation; low manufacturing cost; little maintenance; a long life; a fast-working apparatus.

One or more of the above-mentioned or further objectives of the invention are achieved on the one hand by means of an apparatus of the type described in the preamble, which is characterized by the characterizing features of claim 1 and by means of a method according to claim 37.

In what follows the invention is explained in further detail on the basis of non-limiting exemplary embodiments and with reference to the accompanying drawings, in which
Figure 1 is a cross-sectional side view of a first embodiment of the sensor apparatus according to the invention;
Figure 2 is a plan view of the apparatus shown in Figure 1;
Figure 3 is a cross-sectional plan view of an example of a sensor apparatus useful for understanding the invention;
Figure 4 is a cross-sectional rear view of the apparatus shown in Figure 3;
Figure 5 is a plan view of an other example of an apparatus useful for understanding the invention;
Figure 6 is a plan view of another example of an apparatus useful for understanding the invention;
Figure 7 shows the application of the sensor apparatus of Figures 1 and 2 in a milking implement, in plan view and partially showing the inside, and
Figure 8 is a side view of Figure 7.

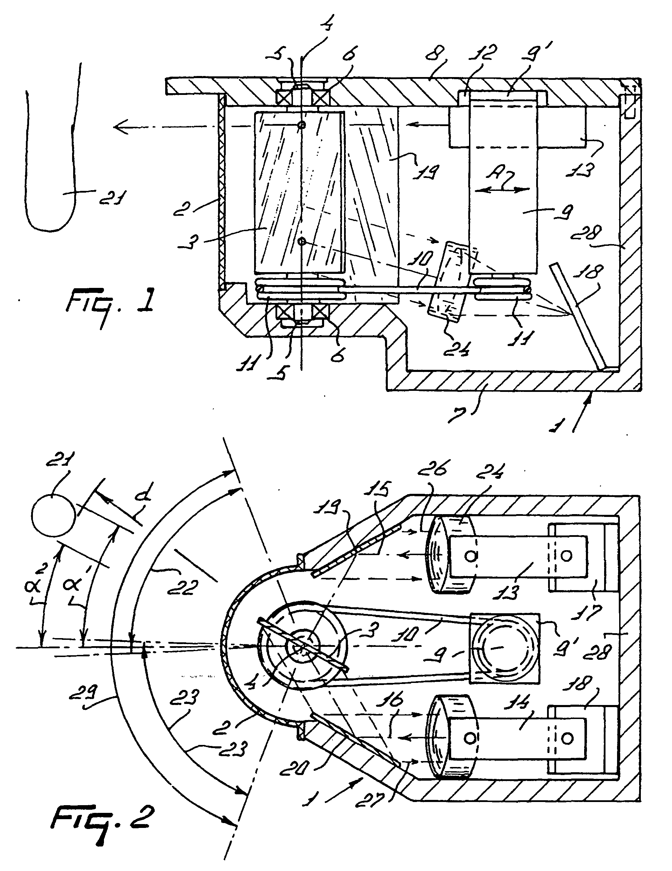

Figures 1, 2, 3 and 4 are to scale. Functionally corresponding parts in the drawings are indicated by the same reference numerals.

The embodiment shown in Figures 1 and 2 comprises a housing 1 having walls made of material which is impenetrable to the relevant ray or beam of rays, such as material which is light-proof to e.g. laser (IR) light, and provided at its front side with an opening or window which is closed by means of a plate, such as a glass plate 2, which is penetrable to the relevant ray or beam of rays. Said plate may also be made e.g. of a suitable synthetic material. The window may be open as well, in which case, however, dust and dirt will easily penetrate into the housing 1 and contaminate same. Behind the plate 2 there is arranged a directional element constituted by a rectangular reflector 3 reflecting at its two principal faces the relevant ray or beam of rays. Alternatively, the directional element may be a light-transmitting one, such as a movable prism or a movable beam of glass fibre cables, or a fixed screen whose refractive index is controllable by e.g. a variable difference in voltage in order to direct a ray or beam of rays in the space. The reflector 3 shown here has a width of approximately 25 mm, a height of approximately 40 mm and a thickness of approximately 1 mm, and its reflection sides are preferably very flat. The reflector 3 is rotatable about its longitudinal central axis 4 and is bearing-supported for that purpose, by means of shafts 5 disposed at its short sides, in bearings 6 in the bottom 7 and the cover 8 of the housing 1. In this embodiment the reflector 3 is driven in rotation via a belt 10 by a drive element designed as an electric motor 9. This belt 10 runs over a pulley 11 which is coupled to the electric motor 9 and to the reflector 3 respectively. The tightening of the endless drive member 10 is adjustable by means of a slidable fastening of the motor 9 to the cover 8, for which purpose the cover 8 has in this case a recess 12 in which is mounted the basis 9' of the motor 9, which basis 9', seen in plan view (Figure 2), has a rectangular shape, and which recess 12, in the direction of the arrow A (Figure 1), is longer than the basis 9' of the motor 9, while, in the direction perpendicular to that according to the arrow A, the size of the recess 12 in the surface of the cover 8 is such that the basis 9' of the motor is close-fittingly included therein. Alternatively, the reflector 3 may also be driven directly by the drive element 9, so without the intermediary of a drive member 10, for which purpose e.g. one of the shafts 6 is coupled co-axially to the outgoing shaft of the motor 9. Preferably, the reflector 3 rotates continuously in the same direction at least substantially at the same speed, so that its drive is lightly loaded and non-sensitive to wear.

As shown in Figure 2. on both sides of the motor 9 there is arranged each time a transmitter element in the form of a laser diode 13, 14. Straight below each transmitter element 13, 14 there is provided a respective receiver element 17, 18 which is designed in this situation as a so-called CCD. The transmission frequency of both diodes 13, 14 is preferably in the range of 600-900 nm, more preferably in the range of 780-830 nm, the transmission frequencies of the transmitter elements 13, 14 mutually differing to such an extent that no disturbing interference occurs when the rays or beams of rays 15, 16 emanating from the transmitter elements 13, 14 cross one another. Furthermore the frequency difference is such that the sensitivity of a receiver element 17, 18 can reliably be attuned to the ray or beam of rays 15, 16 respectively emanating from the transmitter elements 13, 14 respectively located straight above, in order to avoid interference also in this manner as much as possible. Alternatively, instead of the transmission frequency, the transmission amplitude between the transmitter elements 13, 14 may differ as well. Difference in modulation of the transmitted signals is also possible. Besides, the rays or beams of rays 15, 16 respectively, emanating from the transmitter elements 13, 14, may also be sent through the housing 1 at different levels, so that they strike the directional element 3 in an other range of height, thus avoiding at the same time disturbing interference. Other differences in properties of the two rays or beams of rays 15, 16 are possible for preventing disturbing effects of interference, e.g. by using combinations of two or more of the aforementioned measures.

In this situation the two rays or beams of rays have the directional element 3 in common.

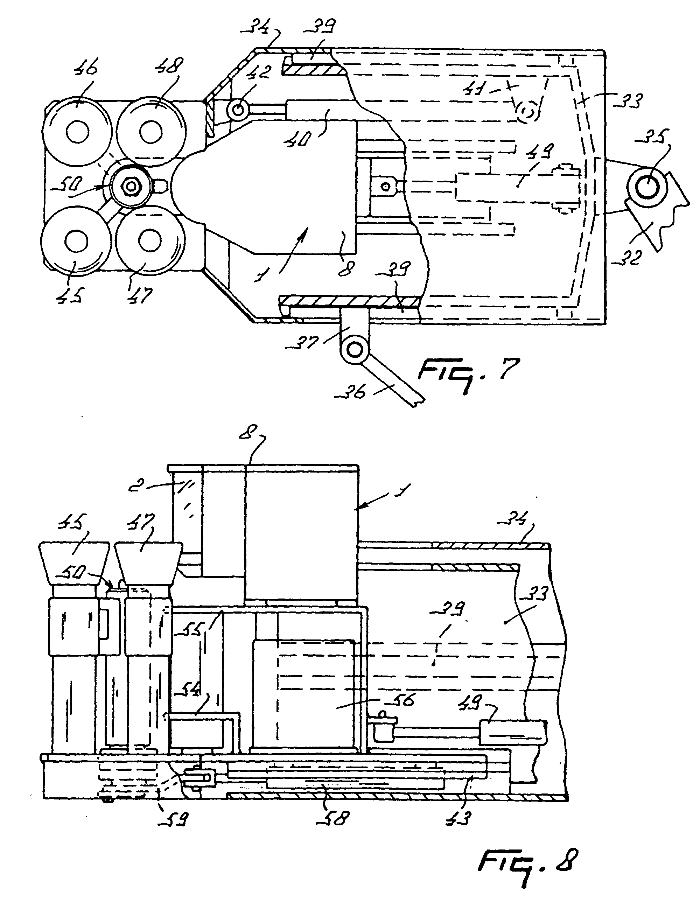

After leaving the respective transmitter element 13, 14, the mutually substantially parallel rays or beams of rays 15, 16 strike a respective deflection element 19, 20 for the purpose of being deflected to the directional element 3 arranged between these deflection elements 19, 20. Each defection element is constituted here by a reflector 19, 20 enclosing an angle of approximately 30° with the incident ray or beam of rays 15, 16 respectively. Alternatively, a respective prism or beam of glass fibre cables may be used as well. Between each deflection element and the respective receiver element 17, 18 there is arranged a focusing element or converging element, in this embodiment constituted by a lens 24, 25, whose function will be explained hereafter. The directional element is capable of directing each ray or beam of rays 15, 16 through a respective angle sector 22, 23 in the space, e.g. for determining the position of a teat 21 of an animal to be milked in that space. In the present embodiment, the angle of each angle sector 22, 23 amounts to 72° and the angle sectors 22, 23 overlap each other by 2°, so that the total angle area 29 to be scanned in the space amounts to 140°. Due to the fact that each ray or beam of rays 15, 16 is a laser light, the angle sectors are, perpendicular to their plane, at least substantially non-diverging, apart from some dispersed radiation. The radiation of the ray or beam of rays 15, 16 reflected or dispersed from the space is caught as a reflection beam 26, 27 by the directional element 3 and directed to the respective receiver element 17, 18 via the respective deflection element 19, 20. The reflection beam 26, 27 passes the respective lens 24, 25, so that the relatively wide reflection beam 26, 27 is concentrated on a local area of the receiver element. Because of the fact that in this embodiment the lens 24, 25 has a fixed focal distance and is in a fixed position relative to the respective receiver element 17, 18, the place where the teat 21 is depicted on the receiver element 17, 18 and the size of that picture are in relation with the position of the teat 21 in the space. The receiver element 17, 18 supplies a corresponding signal, depending on the nature of the signal and its further processing possibly by intermediary of an analog-to-digital converter, to a (non-shown) evaluation device which may e.g. be constituted by a microprocessor. The principle of scanning the teat 21 with the aid of a ray or beam of rays to be directed consecutively to different areas in the space, and the processing of the signals obtained by means of the sensor apparatus, in particular what is described and shown regarding Figures 7 - 11, are set out in detail in EP-A-0360354, which publication is referred to in the present document. It will be obvious that the description given in said publication applies here to each individual subsector 22, 23. The angles α1 and α2 indicated in Figure 2, which are also indicated in Figure 8 of that publication, may e.g. be determined in an evaluation device (see e.g. Figure 7 in EP-A-0360354) on the basis of the place where the object 21 is depicted on the receiver element 17, 18. The distance d between the object and the sensor apparatus may e.g. be determined in an evaluation device on the basis of the size of the picture of the object on the receiver element 17, 18. By updating the position of the directional element 3, e.g. by coupling the motor 9 to a pulse generator supplying a pulse per section of the revolution, e.g. each 1 °, the position of the directional element 3 at the moment when a ray or beam of rays strikes the receiver element 17, and consequently the angles α1 and α2, may be deduced by simple calculation in e.g. a microprocessor. When the teat 21 is located in the other angle sector 23, the ray or beam of rays will of course emanate from the transmitter element 14 and strike the receiver element 18.

For the purpose of e.g. synchronizing or resetting the directional element 3, one or both rays or beams of rays 15, 16 can be directed such that in a predetermined position of the directional element 3 a ray or beam of rays 15, 16, without leaving the apparatus, retum(s) via the directional element 3 to its respective transmitter element or the other transmitter element 13, 14, so that the relevant transmitter element 13, 14 is influenced, which can e.g. be measured on the basis of variations in the current consumption of the transmitter element 13, 14.

For minimizing interference between the rays or beams of rays 15, 16 emanating from the transmitter elements 13, 14 and the reflection beams 26, 27 emanating from the directional element 3, each transmitter element or all the transmitter elements 13, 14 and the respective receiver element 17, 18, seen in the vertical height of the housing 1 (the direction from the bottom 7 to the cover 8), are spaced apart as much as possible. To that end the reflection beam 26, 27 extends obliquely relative to the surface of the cover 8, and the receiver element 17, 18 is substantially located below the directional element 3. The ray or beam of rays 15, 16 extends substantially parallel to the surface of the cover 8.

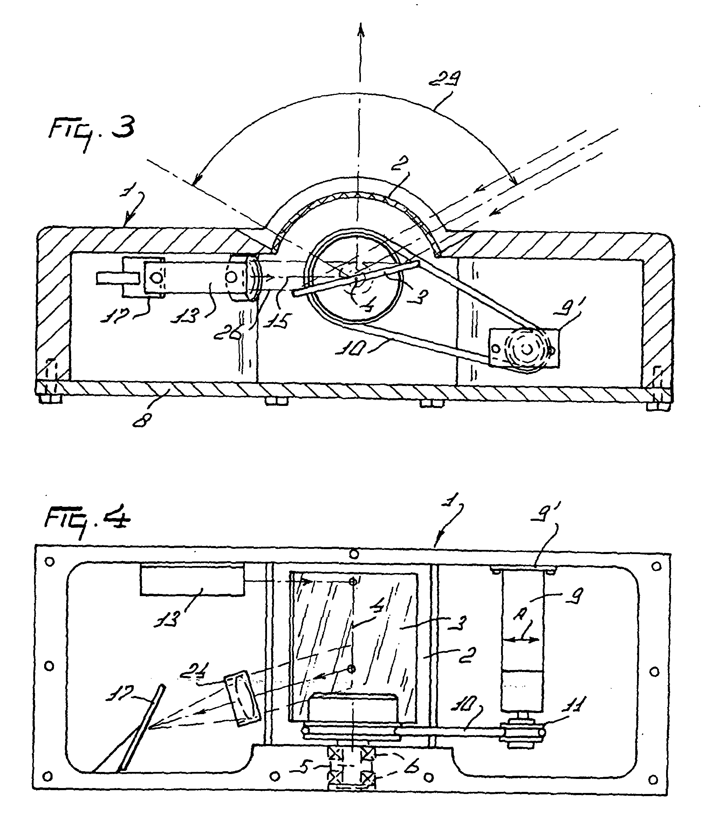

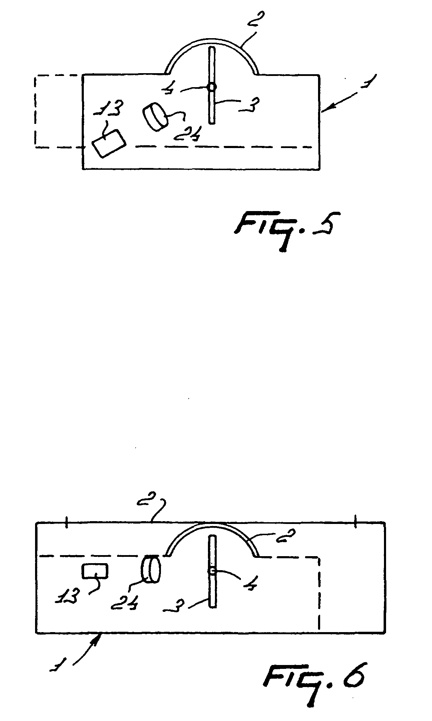

Figures 3 and 4 show an example of a sensor apparatus useful for understanding the invention, in which only one ray or beam of rays 15 is produced. The housing 1 has a height of 80 mm, a depth of 40 mm and a width of 150 mm. The rear wall 28 is detachable. The directional element 3 is now bearing-supported on one side. The ray or beam of rays 15 emanating from the transmitter element 13 extends at least substantially parallel to the rear wall 28 or, in other words, at least substantially perpendicular to the centre line of the angle area 29, seen in plan view (Figure 3), and falls directly on the directional element 3. By means of this arrangement an angle area 29 of 140° can be covered, however with a considerably larger housing 1 in comparison with Figures 1 and 2. The belt 10 can now be stretched due to the fact that the basis 9' of the motor 9 has slotted holes through which fastening means (screws) are passed, which fastening means are fixed in the upper side 8 of the housing. Figure 5 shows an alternative to the example of Figures 3 and 4, in which the ray or beam of rays 15 and the reflection beam 26 respectively, between the directional element 3 and the transmitter element 13, and the receiver element 17 respectively, endose an angle of approximately 20° with the front wall. However, the angle area to be covered in the space by the ray or beam of rays is now limited to approximately 120°. In comparison with the housing 1 according to Figures 3 and 4 (imaginarily shown to scale in Figure 5), the housing of the variant according to Figure 5 is smaller and deeper.

In Figures 1, 2, 3, 4 and 5 the glass plate 2 is curved on one side, while the centre of the curvature of the glass plate 2 coincides at least substantially with the axis 4. Consequently, the ray or beam of rays falls at least substantially perpendicularly through the glass plate 2, so that disturbing reflection is avoided as much as possible. Furthermore, the housing 1 can be as compact as possible for a given volume of the area to be covered by means of the rays or beams of rays 15, 16. Figure 6 shows schematically an embodiment having a flat glass plate 2, for the purpose of clearly explaining the difference in size of the housing 1 when the latter has a curved, respectively a flat glass plate 2, in one and the same angle scanning. The front side and the lateral side of the housing 1 having a curved glass plate 2 is shown imaginarily. It is noticed that the flat dosing means 2 for the window letting through the ray or beam of rays belongs to the inventive idea.

Because of its limited dimensions, great scanning angle, long life, low cost and fast and accurate function, the sensor apparatus according to the invention is particularly suitable for being used in a milking implement. By way of example, there is shown how the sensor apparatus 1 may be incorporated in the milking implements set out and shown in EP-A-0360354, for which purpose Figures 4 and 5, of that publication are copied here as Figures 7 and 8. Apart from the parts designated by the reference numerals 51, 52, 53 and 57, Figures 7 and 8 are an accurate copy of Figures 4, 5 respectively from EP-A-0360354. The other reference numerals correspond to EP-A-0360354 and for their meaning and function reference is made to said publication. It has also to be understood clearly that Figures 1 to 3 of EP-A-0360354 and the corresponding description show how the detail of Figures 7 and 8 of this application may be incorporated in the milking implement.

In the foregoing the invention has been set out on the basis of a number of preferred embodiments while applying laser beams. To alternative rays belong sound (e.g. ultrasonic sound or audible sound) or visible light or radio or radar waves. The two or more separate, preferably parallel rays or beams of rays may also be produced by means of one single transmitter element, in which case e.g. the beam is divided by means of a prism or the beam is passed in a glass fibre cable, whereafter that cable is split up. The difference in property between the rays or beams of rays may also be obtained e.g. by using for one or both rays or beams of rays a respective band-pass fitter, so that after passing the filter the property differs per ray or per beam of rays. By means of the directional element, a ray or beam of rays is moved through the space to be scanned. The function of the directional element may also be fulfilled by pivoting the housing 1 in a reciprocating manner, so that in that case at the place of the rotatable reflector 3 there is arranged e.g. a fixed reflector directing both rays or beams of rays to different places in the space.

According to a further variant there is aimed at adapting the intensity of the ray or beam of rays transmitted by the sensor and/or the sensitivity of the receiver element and/or the quantity of the ray or beam of rays supplied to the receiver element to the nature of the object whose position has to be determined. This principle is based on the one hand on the insight that the intensity of the signal and the sensitivity of the receiver element have to be adapted to each other in order to avoid e.g. "overradiating" of the receiver element. On the other hand this principle is based on the insight that the intensity of the signal has to be adapted to the directing velocity of the directional element in order to avoid e.g. loss of diffusion with laser light. In the case of this variant, if there is decided to adjust the intensity of the transmitted ray or beam of rays depending on the nature of an object (e.g. the colour in case of a teat), it is possible to adapt the directing velocity of a directional element 3 (e.g. the rotating movement thereof) accordingly, so that e.g. the more the scanning velocity is high, the more the ray or beam of rays is intense and consequently the rotation speed of the mirror 3 is high. Controlling the intensity of the signal to be supplied to the receiver element is e.g. possible by means of an attenuation element arranged between the receiver element and the reflector.

## Claims

1. A sensor apparatus designed to determine the position of an object present in a space, in particular a teat (21) of an animal to be milked, relative to the sensor apparatus, which sensor apparatus is provided with at least one transmitter element (13, 14) designed to transmit a ray or beam of rays, a first directional element (3) for directing the ray or beam of rays emanating from the transmitter element consecutively to different areas in that space and/or for directing the ray or beam of rays emanating from the object to the receiver element, at least one receiver element (17, 18) which is designed to receive a ray or beam of rays (26, 27) reflected by the object, **characterized in that** the first directional element (3) is designed to scan the space substantially simultaneously in at least two different subareas having a small overlap, by directing two separate rays or beams of rays emanating from the transmitter element(s) consecutively to different areas in said two subareas respectively.

2. A sensor apparatus as claimed in claim 1, **characterized in that** the sensor apparatus comprises means for producing a ray or beam of rays of which at least one property deviates from those of at least one of the other rays or beams of rays.

3. A sensor apparatus as claimed in claim 1 or 2, **characterized in that** for each separate ray or beam of rays there is provided a separate transmitter and/or receiver element.

4. A sensor apparatus as claimed in claim 2, **characterized in that** the sensitivity of the receiver element is adapted to the property in which a first ray or beam of rays deviates from a further ray or beam of rays.

5. A sensor apparatus as claimed in claim 2 or 4, **characterized in that** the deviating property is the frequency of the ray or beam of rays.

6. A sensor apparatus as claimed in claim 2 or 4, **characterized in that** the deviating property is constituted by the difference between the rays or beams of rays.

7. A sensor apparatus as claimed in claim 2 or 4, **characterized in that** the deviating property concems the amplitude of the relevant ray or beam of rays.

8. A sensor apparatus as claimed in any one of the preceding claims, **characterized in that** the rays or beams of rays are orientated at least substantially parallel.

9. A sensor apparatus as daimed in any one of the preceding claims, **characterized in that** there is provided a deflection element (19, 20), preferably a reflection element, arranged in a fixed position relative to the sensor apparatus, to which the transmitter element and/or the receiver element are/is directed and which is designed to deflect the path of the ray or beam of rays between the directional element and the transmitter element and/or the receiver element.

10. A sensor apparatus as claimed in claim 9, **characterized in that** for each transmitter and/or receiver element there is provided a respective deflection element.

11. A sensor apparatus as claimed in claim 9 or 10, **characterized in that** the deflection element is designed to deflect the path of the ray or beam of rays through an angle not exceeding approximately 90°.

12. A sensor apparatus as claimed in claim 11, **characterized in that** the deflection element comprises a reflection element and that the reflecting surface is orientated towards the transmitter element and/or the receiver element, and encloses an angle not exceeding approximately 45° with the path of the ray or beam of rays between the reflection element and the transmitter element or the receiver element.

13. A sensor apparatus as claimed in any one of claims 9 to 12, **characterized in that** there are provided one or more deflection elements on both sides of the directional element.

14. A sensor apparatus as claimed in any one of the preceding claims, **characterized in that,** in a side view of the apparatus, a transmitter element and a respective receiver element are arranged with some interspace one above the other.

15. A sensor apparatus as claimed in any one of the preceding claims, **characterized in that,** in a side view of the apparatus, the receiver element is arranged at least substantially below the lower side of the directional element.

16. A sensor apparatus as claimed in any one of the preceding claims, **characterized in that,** in a side view of the apparatus, the transmitter element is arranged at least substantially at equal level with the directional element.

17. A sensor apparatus as claimed in any one of the preceding claims, **characterized in that** the directional element is designed to scan the space while a transmitter element is at feast substantially fixedly arranged.

18. A sensor apparatus as claimed in any one of the preceding claims, **characterized in that** the sensor apparatus further comprises an evaluation device designed to receive a signal emanating from the receiver element and containing information conceming the area where the ray or beam of rays strikes the receiver element and which signal is used by the evaluation device for determining by means of the evaluation device the position of the sensor apparatus (α1, α2, d) relative to that object.

19. A sensor apparatus as claimed in any one of the preceding claims, **characterized in that** there is provided a second directional element which is designed to transmit a ray or beam of rays reflected and/or dispersed from an object being in a random position in the space to the receiver element.

20. A sensor apparatus as claimed in any one of the preceding claims, **characterized in that** the first and/or the second directional element are/is arranged in the path of the ray or beam of rays between the object and the transmitter element and/or the receiver element.

21. A sensor apparatus as claimed in any one of the preceding claims, **characterized in that** the first and/or the second directional element are/is constituted by a radiation reflection element which, preferably at two sides and more preferably at two opposite sides, has a reflective function.

22. A sensor apparatus as claimed in any one of the preceding claims, **characterized in that** the first and/or the second directional element are/is pivotable or rotatable about an axis extending parallel to their/its plane.

23. A sensor apparatus as claimed in any one of the preceding claims provided with a first and a second directional element, **characterized in that** the first and the second directional element are integrated.

24. A sensor apparatus as daimed in any one of the preceding claims, **characterized in that** the transmitter element, the receiver element and the directional element are accommodated in a housing provided with a window for passing the ray or beam of rays emanating from the transmitter element and/or the ray or beam of rays emanating from the object.

25. A sensor apparatus as claimed in claim 24, **characterized in that** the window is closed by means of a cover plate (2) made of material which is penetrable to that ray or beam of rays, and that this cover plate is at least curved on one side.

26. A sensor apparatus as claimed in claim 25, **characterized in that** the centre of curvature of the cover plate and the pivotal axis or the axis of rotation of the first and/or the second directional element coincide at least substantially.

27. A sensor apparatus as claimed in any one of the preceding claims, **characterized in that** the transmitter element and/or the receiver element are/is directly directed to the directional element.

28. A sensor apparatus as claimed in any one of the preceding claims, **characterized in that** in the path to be followed by the ray or beam of rays emanating from the object between the receiver element and the directional element there are arranged one or more focusing elements (24, 25), such as lenses.

29. A sensor apparatus as claimed in claim 28, **characterized in that** of at least one of the focusing elements the focal distance is fixed relative to the receiver element.

30. A sensor apparatus as claimed in any one of the preceding claims, **characterized in that** the transmitter element is suitable for producing a laser beam.

31. A sensor apparatus as claimed in any one of the preceding claims, **characterized in that** the receiver element is constituted by a diode sensor.

32. A sensor apparatus as claimed in any one of the preceding claims, **characterized in that** the receiver element comprises a unidimensional or two-dimensional range of detector elements adjacent to each other, which detector elements are all sensitive to the respective radiation and, when being exposed to that radiation, supply a detection signal corresponding to the intensity of that radiation, which is the signal to be supplied to the evaluation device or serves as a basis therefor, said receiver element being constituted in particular by a so-called CCD.

33. A sensor apparatus as claimed in any one of the preceding claims, **characterized in that** the sensor apparatus comprises a housing having a width, depth and height each amounting to approximately 100 mm.

34. A sensor apparatus as claimed in any one of the preceding claims, **characterized in that** the sensor apparatus has for directional element a double-sided mirror which is rotatable about the longitudinal central axis of said sensor apparatus and whose width amounts to approximately 25 mm.

35. A sensor apparatus as claimed in any one of the preceding claims, **characterized in that** the sensor apparatus comprises means for adjusting the intensity of the ray or beam of rays to be supplied by the apparatus and/or adjusting the intensity of the ray or beam of rays received from the object and to be transmitted to the receiver element.

36. A sensor apparatus as claimed in any one of the preceding claims, **characterized in that** this sensor apparatus comprises means for adjusting the directing velocity of the directional element

37. A method of determining the position of an object present in a space while using a sensor apparatus, said sensor apparatus comprising at least one transmitter element designed to transmit a ray or beam of rays; a first directional element for directing the ray or beam of rays emanating from the transmitter element consecutively to different areas in that space and/or for directing the ray or beam of rays emanating from the object to the receiver element; a receiver element designed to receive the ray or beam of rays reflected and/or dispersed by said object; an evaluation device designed to receive a signal emanating from the receiver element and containing information conceming the area where the ray or beam of rays strikes the receiver element for determining the position of the sensor apparatus relative to said object, **characterized in that** at least two different subareas having a small overlap are scanned substantially simultaneously by said first directional element directing two separate rays or beams of rays emanating from the transmitter element consecutively to different areas in said two subareas respectively, each subarea being scanned by a respective separate ray or beam of rays.

38. A method as claimed in claim 37, **characterized in that** there is used a substantially fixedly arranged transmitter element.

39. A method as claimed in claim 37 or 38, **characterized in that** by means of the ray or beam of rays a substantially two-dimensional area is scanned.

40. A method as claimed in claim 39, **characterized in that** the area is an angle sector, broadening from the apparatus, of at least approximately 100°, preferably of approximately 120° or 140°.

## Patentansprüche

1. Sensorvorrichtung zur Ermittlung der Position eines Objekts in einem Raum, insbesondere einer Zitze (21) eines zu melkenden Tieres, relativ zu der Sensorvorrichtung, wobei die Sensorvorrichtung folgende Teile aufweist: mindestens ein Sendeelement (13, 14) zum Senden eines Strahls oder Strahlenbündels, ein erstes Richtelement (3), um den von dem Sendeelement ausgehenden Strahl oder das Strahlenbündel nacheinander auf unterschiedliche Bereiche in diesem Raum zu richten und/oder um den von dem Objekt ausgehenden Strahl oder das Strahlenbündel auf das Empfangselement zu richten, sowie mindestens ein Empfangselement (17, 18) zum Empfangen eines von dem Objekt reflektierten Strahls oder Strahlenbündels (26, 27),
**dadurch gekennzeichnet, daß** das erste Richtelement (3) dazu ausgebildet ist, den Raum im wesentlichen gleichzeitig in mindestens zwei unterschiedlichen, sich geringfügig überlappenden Unterbereichen abzutasten, indem zwei separate, von dem/den Sendeelement(en) ausgehende Strahlen oder Strahlenbündel nacheinander jeweils auf unterschiedliche Bereiche in den beiden Unterbereichen gerichtet werden.

2. Sensorvorrichtung nach Anspruch 1,
**dadurch gekennzeichnet, daß** die Sensorvorrichtung eine Vorrichtung zum Erzeugen eines Strahls oder Strahlenbündels umfaßt, bei dem mindestens eine Eigenschaft von den Eigenschaften mindestens eines der anderen Strahlen oder Strahlenbündel abweicht.

3. Sensorvorrichtung nach Anspruch 1 oder 2,
**dadurch gekennzeichnet, daß** für jeden separaten Strahl oder Strahlenbündel ein separates Sende- und/oder Empfangselement vorgesehen ist.

4. Sensorvorrichtung nach Anspruch 2,
**dadurch gekennzeichnet, daß** die Empfindlichkeit des Empfangselements an die Eigenschaft angepaßt ist, durch die ein erster Strahl oder Strahlenbündel von einem weiteren Strahl oder Strahlenbündel abweicht.

5. Sensorvorrichtung nach Anspruch 2 oder 4,
**dadurch gekennzeichnet, daß** die abweichende Eigenschaft die Frequenz des Strahls oder Strahlenbündels ist.

6. Sensorvorrichtung nach Anspruch 2 oder 4,
**dadurch gekennzeichnet, daß** die abweichende Eigenschaft durch die Differenz zwischen den Strahlen oder Strahlenbündeln gebildet ist.

7. Sensorvorrichtung nach Anspruch 2 oder 4,
**dadurch gekennzeichnet, daß** sich die abweichende Eigenschaft auf die Amplitude des betreffenden Strahls oder Strahlenbündels bezieht.

8. Sensorvorrichtung nach einem der vorhergehenden Ansprüche,
**dadurch gekennzeichnet, daß** die Strahlen oder Strahlenbündel zumindest im wesentlichen parallel ausgerichtet sind.

9. Sensorvorrichtung nach einem der vorhergehenden Ansprüche,
**dadurch gekennzeichnet, daß** ein Umlenkelement (19, 20), vorzugsweise ein Reflexionselement, vorgesehen ist, das in einer festen Position relativ zu der Sensorvorrichtung angeordnet ist, auf das das Sendeelement und/oder das Empfangselement gerichtet sind/ist, und welches dazu ausgebildet ist, den Strahlengang des Strahls oder Strahlenbündels zwischen dem Richtelement und dem Sendeelement und/oder dem Empfangselement umzulenken.

10. Sensorvorrichtung nach Anspruch 9,
**dadurch gekennzeichnet, daß** für jedes Sende- und/oder Empfangselement ein zugehöriges Umlenkelement vorgesehen ist.

11. Sensorvorrichtung nach Anspruch 9 oder 10,
**dadurch gekennzeichnet, daß** das Umlenkelement dazu ausgebildet ist, den Strahlengang des Strahls oder Strahlenbündels in einem Winkel umzulenken, der annähernd 90° nicht übersteigt.

12. Sensorvorrichtung nach Anspruch 11,
**dadurch gekennzeichnet, daß** das Umlenkelement ein Reflexionselement umfaßt, und daß die reflektierende Oberfläche auf das Sendeelement und/oder das Empfangselement gerichtet ist und mit dem Strahlengang des Strahls oder Strahlenbündels zwischen dem Reflexionselement und dem Sendeelement oder dem Empfangselement einen Winkel bildet, der annähernd 45° nicht übersteigt.

13. Sensorvorrichtung nach einem der Ansprüche 9 bis 12,
**dadurch gekennzeichnet, daß** auf beiden Seiten des Richtelements ein oder mehrere Umlenkelemente vorgesehen sind.

14. Sensorvorrichtung nach einem der vorhergehenden Ansprüche,
**dadurch gekennzeichnet, daß** in Seitenansicht der Vorrichtung ein Sendeelement und ein zugehöriges Empfangselement mit etwas Abstand übereinander angeordnet sind.

15. Sensorvorrichtung nach einem der vorhergehenden Ansprüche,
**dadurch gekennzeichnet, daß** in Seitenansicht der Vorrichtung das Empfangselement zumindest im wesentlichen unterhalb der Unterseite des Richtelements angeordnet ist.

16. Sensorvorrichtung nach einem der vorhergehenden Ansprüche,
**dadurch gekennzeichnet, daß** in Seitenansicht der Vorrichtung das Sendeelement zumindest im wesentlichen in gleicher Höhe mit dem Richtelement angeordnet ist.

17. Sensorvorrichtung nach einem der vorhergehenden Ansprüche,
**dadurch gekennzeichnet, daß** das Richtelement dazu ausgebildet ist, den Raum abzutasten, während ein Sendeelement zumindest im wesentlichen fest angeordnet ist.

18. Sensorvorrichtung nach einem der vorhergehenden Ansprüche,
**dadurch gekennzeichnet, daß** die Sensorvorrichtung ferner eine Bewertungsvorrichtung umfaßt, die dazu ausgebildet ist, ein Signal zu empfangen, das von dem Empfangselement ausgeht und Informationen über den Bereich enthält, in dem der Strahl oder das Strahlenbündel auf das Empfangselement trifft, wobei das Signal von der Bewertungsvorrichtung dazu verwendet wird, mit Hilfe der Bewertungsvorrichtung die Position der Sensorvorrichtung (α1, α2, d) relativ zu diesem Objekt zu ermitteln.

19. Sensorvorrichtung nach einem der vorhergehenden Ansprüche,
**dadurch gekennzeichnet, daß** ein zweites Richtelement vorgesehen ist, das dazu ausgebildet ist, einen Strahl oder ein Strahlenbündel, der von einem Objekt in einer beliebigen Position in dem Raum reflektiert und/oder zerstreut wird, zu dem Empfangselement zu senden.

20. Sensorvorrichtung nach einem der vorhergehenden Ansprüche,
**dadurch gekennzeichnet, daß** das erste und/oder das zweite Richtelement in dem Strahlengang des Strahls oder Strahlenbündels zwischen dem Objekt und dem Sendeelement und/oder dem Empfangselement angeordnet sind/ist.

21. Sensorvorrichtung nach einem der vorhergehenden Ansprüche,
**dadurch gekennzeichnet, daß** das erste und/oder das zweite Richtelement durch ein Strahlungsreflexionselement gebildet sind/ist, das vorzugsweise auf zwei Seiten und höchst vorzugsweise auf zwei gegenüberliegenden Seiten eine reflektierende Wirkung hat.

22. Sensorvorrichtung nach einem der vorhergehenden Ansprüche,
**dadurch gekennzeichnet, daß** das erste und/oder das zweite Richtelement um eine Achse schwenkbar oder drehbar sind/ist, die sich parallel zu ihrer/seiner Ebene erstreckt.

23. Sensorvorrichtung nach einem der vorhergehenden Ansprüche mit einem ersten und einem zweiten Richtelement,
**dadurch gekennzeichnet, daß** das erste und das zweite Richtelement integriert sind.

24. Sensorvorrichtung nach einem der vorhergehenden Ansprüche,
**dadurch gekennzeichnet, daß** das Sendeelement, das Empfangselement und das Richtelement in einem Gehäuse angeordnet sind, das mit einem Fenster versehen ist, um den von dem Sendeelement ausgehenden Strahl oder das Strahlenbündel und/oder den von dem Objekt ausgehenden Strahl oder das Strahlenbündel durchzulassen.

25. Sensorvorrichtung nach Anspruch 24,
**dadurch gekennzeichnet, daß** das Fenster mittels einer Abdeckplatte (2) aus einem Material verschlossen ist, das von diesem Strahl oder Strahlenbündel durchdrungen werden kann, und daß diese Abdeckplatte zumindest auf einer Seite gekrümmt ist.

26. Sensorvorrichtung nach Anspruch 25,
**dadurch gekennzeichnet, daß** der Krümmungsmittelpunkt der Abdeckplatte und die Schwenkachse oder die Drehachse des ersten und/oder des zweiten Richtelements zumindest im wesentlichen zusammenfallen.

27. Sensorvorrichtung nach einem der vorhergehenden Ansprüche,
**dadurch gekennzeichnet, daß** das Sendeelement und/oder das Empfangselement unmittelbar auf das Richtelement gerichtet sind/ist.

28. Sensorvorrichtung nach einem der vorhergehenden Ansprüche,
**dadurch gekennzeichnet, daß** in dem Strahlengang des von dem Objekt ausgehenden Strahls oder Strahlenbündels zwischen dem Empfangselement und dem Richtelement ein oder mehrere Fokussierelemente (24, 25), wie z. B. Linsen, angeordnet sind.

29. Sensorvorrichtung nach Anspruch 28,
**dadurch gekennzeichnet, daß** bei mindestens einem der Fokussierelemente die Fokaldistanz relativ zu dem Empfangselement festgelegt ist.

30. Sensorvorrichtung nach einem der vorhergehenden Ansprüche,
**dadurch gekennzeichnet, daß** das Sendeelement geeignet ist, einen Laserstrahl zu erzeugen.

31. Sensorvorrichtung nach einem der vorhergehenden Ansprüche,
**dadurch gekennzeichnet, daß** das Empfangselement durch einen Diodensensor gebildet ist.

32. Sensorvorrichtung nach einem der vorhergehenden Ansprüche,
**dadurch gekennzeichnet, daß** das Empfangselement eine eindimensionale oder zweidimensionale Reihe von nebeneinander angeordneten Detektorelementen umfaßt, wobei die Detektorelemente alle auf die entsprechende Strahlung ansprechen und, wenn sie dieser Strahlung ausgesetzt werden, ein der Stärke dieser Strahlung entsprechendes Detektionssignal liefern, wobei dieses Signal der Bewertungsvorrichtung zuzuführen ist oder als Basis dafür dient, wobei das Empfangselement insbesondere durch ein sogenanntes CCD gebildet ist.

33. Sensorvorrichtung nach einem der vorhergehenden Ansprüche,
**dadurch gekennzeichnet, daß** die Sensorvorrichtung ein Gehäuse umfaßt, dessen Breite, Tiefe und Höhe jeweils etwa 100 mm beträgt.

34. Sensorvorrichtung nach einem der vorhergehenden Ansprüche,
**dadurch gekennzeichnet, daß** die Sensorvorrichtung als Richtelement einen doppelseitigen Spiegel aufweist, der um die Längsmittelachse der Sensorvorrichtung drehbar ist, und dessen Breite etwa 25 mm beträgt.

35. Sensorvorrichtung nach einem der vorhergehenden Ansprüche,
**dadurch gekennzeichnet, daß** die Sensorvorrichtung eine Vorrichtung zum Einstellen der Stärke des von der Vorrichtung zu liefernden Strahls oder Strahlenbündels und/oder zum Einstellen der Stärke des Strahls oder Strahlenbündels umfaßt, der von dem Objekt empfangen wird und an das Empfangselement zu senden ist.

36. Sensorvorrichtung nach einem der vorhergehenden Ansprüche,
**dadurch gekennzeichnet, daß** diese Sensorvorrichtung eine Vorrichtung zum Einstellen der Richtgeschwindigkeit des Richtelements umfaßt.

37. Verfahren zum Ermitteln der Position eines Objekts in einem Raum unter Verwendung einer Sensorvorrichtung, wobei die Sensorvorrichtung folgende Teile umfaßt: mindestens ein Sendeelement zum Senden eines Strahls oder Strahlenbündels; ein erstes Richtelement, um den von dem Sendeelement ausgehenden Strahl oder das Strahlenbündel nacheinander auf verschiedene Bereiche in diesem Raum zu richten und/oder um den von dem Objekt ausgehenden Strahl oder das Strahlenbündel auf das Empfangselement zu richten; ein Empfangselement, zum Empfangen des von dem Objekt reflektierten und/oder zerstreuten Strahls oder Strahlenbündels; eine Bewertungsvorrichtung zum Empfangen eines Signals, das von dem Empfangselement ausgeht und Informationen über den Bereich enthält, in dem der Strahl oder das Strahlenbündel auf das Empfangselement trifft, um die Position der Sensorvorrichtung relativ zu dem Objekt zu ermitteln,
**dadurch gekennzeichnet, daß** mindestens zwei verschiedene Unterbereich mit geringfügiger Überlappung im wesentlichen gleichzeitig von dem ersten Richtelement **dadurch** abgetastet werden, daß zwei von dem Sendeelement ausgehende, separate Strahlen oder Strahlenbündel nacheinander jeweils auf verschiedene Bereiche in den beiden Unterbereichen gerichtet werden, wobei jeder Unterbereich von einem entsprechenden separaten Strahl oder Strahlenbündel abgetastet wird.

38. Verfahren nach Anspruch 37,
**dadurch gekennzeichnet, daß** ein im wesentlichen fest angeordnetes Sendeelement verwendet wird.

39. Verfahren nach Anspruch 37 oder 38,
**dadurch gekennzeichnet, daß** mittels des Strahls oder Strahlenbündels ein im wesentlichen zweidimensionaler Bereich abgetastet wird.

40. Verfahren nach Anspruch 39,
**dadurch gekennzeichnet, daß** der Bereich ein sich von der Vorrichtung her aufweitender Winkelsektor von mindestens annähernd 100°, vorzugsweise von annähernd 120° oder 140° ist.

## Revendications

1. Appareil de détection conçu pour déterminer la position d'un objet présent dans un espace; en particulier un trayon (21) d'un animal à traire, par rapport à l'appareil de détection, lequel appareil de détection est muni d'au moins un élément émetteur (13, 14) conçu pour émettre un rayon ou un faisceau de rayons, d'un premier élément directionnel (3) destiné à diriger le rayon ou le faisceau de rayons provenant de l'élément émetteur de manière consécutive sur différentes zones dans cet espace et/ou à diriger le rayon ou le faisceau de rayons provenant de l'objet sur l'élément récepteur, d'au moins un élément récepteur (17, 18) conçu pour recevoir un rayon ou un faisceau de rayons (26, 27) réfléchi par l'objet, **caractérisé en ce que** le premier élément directionnel (3) est conçu pour balayer l'espace de manière sensiblement simultanée dans aux moins deux sous-zones différentes ayant un chevauchement réduit, en dirigeant deux rayons ou faisceaux de rayons séparés provenant de/des élément(s) émetteur(s) de manière consécutive sur différentes zones dans lesdites deux sous-zones respectivement.

2. Appareil de détection selon la revendication 1, **caractérisé en ce que** l'appareil de détection comprend un moyen destiné à produire un rayon ou un faisceau de rayons dont au moins une propriété s'écarte de celles d'au moins l'un des autres rayons ou faisceaux de rayons.

3. Appareil de détection selon la revendication 1 ou 2, **caractérisé en ce que**, pour chaque rayon ou faisceau de rayons séparé, un élément émetteur et/ou un élément récepteur est/sont prévu(s).

4. Appareil de détection selon la revendication 2, **caractérisé en ce que** la sensibilité de l'élément récepteur est adaptée à la propriété selon laquelle un premier rayon ou faisceau de rayons s'écarte d'un autre rayon ou faisceau de rayons.

5. Appareil de détection selon la revendication 2 ou 4, **caractérisé en ce que** la propriété d'écart est la fréquence du rayon ou du faisceau de rayons.

6. Appareil de détection selon la revendication 2 ou 4, **caractérisé en ce que** la propriété d'écart est constituée par la différence entre les rayons ou faisceaux de rayons.

7. Appareil de détection selon la revendication 2 ou 4, **caractérisé en ce que** la propriété d'écart concerne l'amplitude du rayon ou du faisceau de rayons pertinent.

8. Appareil de détection selon l'une quelconque des revendications précédentes, **caractérisé en ce que** les rayons ou faisceaux de rayons sont orientés de manière au moins sensiblement parallèle.

9. Appareil de détection selon l'une quelconque des revendications précédentes, **caractérisé en ce qu'**un élément de déviation (19, 20) est prévu, de préférence un élément réfléchissant, agencé dans une position fixe par rapport à l'appareil de détection, vers lequel l'élément émetteur et/ou l'élément récepteur est/sont dirigé(s) et qui est conçu pour dévier la trajectoire du rayon ou du faisceau de rayons entre l'élément directionnel et l'élément émetteur et/ou l'élément récepteur.

10. Appareil de détection selon la revendication 9, **caractérisé en ce que**, pour chaque élément émetteur et/ou élément récepteur, il est prévu un élément respectif de déviation.

11. Appareil de détection selon la revendication 9 ou 10, **caractérisé en ce que** l'élément de déviation est conçu pour dévier la trajectoire du rayon ou du faisceau de rayons suivant un angle ne dépassant pas 90° environ.

12. Appareil de détection selon la revendication 11, **caractérisé en ce que** l'élément de déviation comprend un élément réfléchissant et **en ce que** la surface réfléchissante est orientée vers l'élément émetteur et/ou l'élément récepteur, et **en ce qu'**elle renferme un angle ne dépassant pas 45° environ avec la trajectoire du rayon ou du faisceau de rayons entre l'élément réfléchissant et l'élément émetteur ou l'élément récepteur.

13. Appareil de détection selon l'une quelconque des revendications 9 à 12, **caractérisé en ce qu'**un ou plusieurs élément(s) de déviation est/sont prévu(s) des deux côtés de l'élément directionnel.

14. Appareil de détection selon l'une quelconque des revendications précédentes, **caractérisé en ce que**, sur une vue latérale de l'appareil, un élément émetteur et un élément récepteur respectif sont agencés avec un certain intervalle l'un au-dessus de l'autre.

15. Appareil de détection selon l'une quelconque des revendications précédentes, **caractérisé en ce que**, sur une vue latérale de l'appareil, l'élément récepteur est agencé au moins sensiblement en dessous de la face inférieure de l'élément directionnel.

16. Appareil de détection selon l'une quelconque des revendications précédentes, **caractérisé en ce que**, sur une vue latérale de l'appareil, l'élément émetteur est agencé au moins sensiblement au même niveau que l'élément directionnel.

17. Appareil de détection selon l'une quelconque des revendications précédentes, **caractérisé en ce que** l'élément directionnel est conçu pour balayer l'espace tandis qu'un élément émetteur est agencé de manière au moins sensiblement fixe.

18. Appareil de détection selon l'une quelconque des revendications précédentes, **caractérisé en ce que** l'appareil de détection comprend en outre un dispositif d'évaluation conçu pour recevoir un signal provenant de l'élément récepteur et contenant des informations concernant la zone dans laquelle le rayon ou le faisceau de rayons frappe l'élément récepteur, lequel signal est utilisé par le dispositif d'évaluation pour déterminer à l'aide du dispositif d'évaluation la position de l'appareil de détection (α1, α2, d) par rapport à cet objet.

19. Appareil de détection selon l'une quelconque des revendications précédentes, **caractérisé en ce qu'**il est prévu un second élément directionnel qui est conçu pour émettre un rayon ou un faisceau de rayons réfléchi et/ou dispersé à partir d'un objet se trouvant dans une position aléatoire dans l'espace vers l'élément récepteur.

20. Appareil de détection selon l'une quelconque des revendications précédentes, **caractérisé en ce que** le premier et/ou le second élément(s) directionnel(s) est/sont agencé(s) dans la trajectoire du rayon ou du faisceau de rayons entre l'objet et l'élément émetteur et/ou l'élément récepteur.

21. Appareil de détection selon l'une quelconque des revendications précédentes, **caractérisé en ce que** le premier et/ou le second élément(s) directionnel(s) est/sont constitué(s) par un élément de réflexion de rayonnement qui, de préférence au niveau de deux côtés et de manière davantage préférée, au niveau de deux côtés opposés, a une fonction réfléchissante.

22. Appareil de détection selon l'une quelconque des revendications précédentes, **caractérisé en ce que** le premier et/ou le second élément(s) directionnel(s) peut/peuvent pivoter ou tourner autour d'un axe s'étendant parallèlement à son/leur plan.

23. Appareil de détection selon l'une quelconque des revendications précédentes muni d'un premier et d'un second éléments directionnels, **caractérisé en ce que** le premier et le second éléments directionnels sont intégrés.

24. Appareil de détection selon l'une quelconque des revendications précédentes, **caractérisé en ce que** l'élément émetteur, l'élément récepteur et l'élément directionnel sont accueillis dans un logement muni d'une fenêtre pour le passage du rayon ou du faisceau de rayons provenant de l'élément émetteur et/ou le rayon ou le faisceau de rayons provenant de l'objet.

25. Appareil de détection selon la revendication 24, **caractérisé en ce que** la fenêtre est fermée à l'aide d'une plaque de recouvrement (2) réalisée dans un matériau qui est pénétrable à celui du rayon ou du faisceau de rayons, et **en ce que** cette plaque de recouvrement est au moins courbe sur un côté.

26. Appareil de détection selon la revendication 25, **caractérisé en ce que** le centre de courbure de la plaque de recouvrement et l'axe de pivotement ou l'axe de rotation du premier et/ou du second élément(s) directionnel(s) coïncident au moins sensiblement.

27. Appareil de détection selon l'une quelconque des revendications précédentes, **caractérisé en ce que** l'élément émetteur et/ou l'élément récepteur est/sont directement dirigé(s) vers l'élément directionnel.

28. Appareil de détection selon l'une quelconque des revendications précédentes, **caractérisé en ce que**, dans la trajectoire que doit suivre le rayon ou le faisceau de rayons provenant de l'objet entre l'élément récepteur et l'élément directionnel, est/sont agencé(s) un ou plusieurs éléments de focalisation (24, 25), comme des lentilles.

29. Appareil de détection selon la revendication 28, **caractérisé en ce que**, d'au moins l'un des éléments de focalisation, la distance focale est fixe par rapport à l'élément récepteur.

30. Appareil de détection selon l'une quelconque des revendications précédentes, **caractérisé en ce que** l'élément émetteur est approprié pour produire un faisceau laser.

31. Appareil de détection selon l'une quelconque des revendications précédentes, **caractérisé en ce que** l'élément récepteur est constitué d'un détecteur à diode.

32. Appareil de détection selon l'une quelconque des revendications précédentes, **caractérisé en ce que** l'élément récepteur comprend une série d'éléments de détection unidimensionnels ou bidimensionnels situés de manière adjacente les uns par rapport aux autres, lesquels éléments de détection sont tous sensibles au rayonnement respectif et, lorsqu'ils sont exposés à ce rayonnement, fournissent un signal de détection correspondant à l'intensité de ce rayonnement, lequel signal est le signal qui doit être fourni au dispositif d'évaluation ou qui sert de base à celui-ci, ledit élément récepteur étant constitué en particulier par ce que l'on appelle un capteur CCD.

33. Appareil de détection selon l'une quelconque des revendications précédentes, **caractérisé en ce que** l'appareil de détection comprend un logement ayant une largeur, une profondeur et une hauteur équivalant chacune à 100 mm environ.

34. Appareil de détection selon l'une quelconque des revendications précédentes, **caractérisé en ce que** l'appareil de détection comporte un miroir à double face en tant qu'élément directionnel, lequel miroir peut tourner autour de l'axe central longitudinal dudit appareil de détection et dont la largeur équivaut à 25 mm environ.

35. Appareil de détection selon l'une quelconque des revendications précédentes, **caractérisé en ce que** l'appareil de détection comprend un moyen destiné à régler l'intensité du rayon ou du faisceau de rayons devant être fourni par l'appareil et/ou à régler l'intensité du rayon ou du faisceau de rayons reçu à partir de l'objet et devant être transmis à l'élément récepteur.

36. Appareil de détection selon l'une quelconque des revendications précédentes, **caractérisé en ce que** cet appareil de détection comprend un moyen destiné à régler la vitesse de direction de l'élément directionnel.

37. Procédé de détermination de la position d'un objet présent dans un espace en utilisant un appareil de détection, ledit appareil de détection comprenant au moins un élément émetteur conçu pour émettre un rayon ou un faisceau de rayons, un premier élément directionnel destiné à diriger le rayon ou le faisceau de rayons provenant de l'élément émetteur de manière consécutive sur plusieurs zones dans cet espace et/ou à diriger le rayon ou le faisceau de rayons provenant de l'objet sur l'élément récepteur, un élément récepteur conçu pour recevoir le rayon ou le faisceau de rayons réfléchi et/ou dispersé par ledit objet, un dispositif d'évaluation conçu pour recevoir un signal provenant de l'élément récepteur et contenant des informations concernant la zone dans laquelle le rayon ou le faisceau de rayons frappe l'élément récepteur pour déterminer la position de l'appareil de détection par rapport audit objet, **caractérisé en ce qu'**au moins deux sous-zones différentes ayant un chevauchement réduit sont balayées de manière sensiblement simultanée par ledit premier élément directionnel dirigeant deux rayons ou faisceaux de rayons séparés provenant de l'élément émetteur de manière consécutive sur différentes zones dans lesdites deux sous-zones respectivement, chaque sous-zone étant balayée par un rayon ou un faisceau de rayons respectif séparé.

38. Procédé selon la revendication 37, **caractérisé en ce qu'**on utilise un élément émetteur agencé de manière sensiblement fixe.

39. Procédé selon la revendication 37 ou 38, **caractérisé en ce que**, à l'aide du rayon ou du faisceau de rayons, une zone sensiblement bidimensionnelle est balayée.

40. Procédé selon la revendication 39, **caractérisé en ce que** la zone est un secteur angulaire, s'élargissant à partir de l'appareil, d'au moins 100° environ, de préférence de 120° ou de 140° environ.
